# EUROPÄISCHE PATENTSCHRIFT

(11) **EP 3 210 458 B1**
(45) Veröffentlichungstag und Bekanntmachung des Hinweises auf die Patenterteilung: **30.11.2022**
(21) Anmeldenummer: 17156461.0
(22) Anmeldetag: 16.02.2017
(51) Int. Cl.: A01D 41/127, G01F 1/692, G01P 5/12

(54) **SENSOREINHEIT ZUR MESSUNG DES MASSESTROMES DER FESTEN PHASEN BIOGENER MEHRPHASENSTRÖMUNGEN SOWIE STRÖMUNGSMECHANISCHER KENNGRÖSSEN DER GASFÖRMIGEN PHASE**
SENSOR UNIT FOR MEASURING THE MASS FLOW OF THE SOLID PHASES OF BIOGENIC MULTI-PHASE FLOWS AND FLOW RATE CHARACTERISTICS OF THE GASEOUS PHASE
UNITÉ DE DÉTECTION DESTINÉE À MESURER LE FLUX MASSIQUE DES PHASES SOLIDES DE DÉBITS POLYPHASIQUES BIOGÈNES ET GRANDEURS CARACTÉRISTIQUES MÉCANIQUES D'ÉCOULEMENT DE LA PHASE GAZEUSE

(30) Priorität: 26.02.2016 DE 102016203079
(43) Veröffentlichungstag der Anmeldung: 30.08.2017
(73) Patentinhaber: Technische Universität Dresden, 01069 Dresden (DE); miunske GmbH, 02692 Großpostwitz (DE)
(72) Erfinder: Herlitzius, Thomas, Prof. Dr., 01640 Coswig (DE); Korn, Christian, 01157 Dresden (DE); Bernhardt, Jörg, 01728 Bannewitz (DE); Grimsel, Matthias, Dr., 01920 Haselbachtal (DE); Mitlöhner, Peter, 02730 Ebersbach-Neugersdorf (DE); Gössel, Martin, 02692 Großpostwitz/O.L. (DE); Müller, Sebastian, 01896 Ohorn (DE); Kirstein, Stephan, 02692 Großpostwitz/O.L. (DE)
(74) Vertreter: Kailuweit & Uhlemann Patentanwälte Partnerschaft mbB

(56) Entgegenhaltungen:
- EP-A1- 2 401 906
- US-A- 4 360 998
- US-A1- 2016 000 008
- US-B1- 6 591 145

## Beschreibung

Gegenstand der vorliegenden Erfindung ist eine Vorrichtung zur Messung der festen Phasen in Mehrphasenströmungen, insbesondere zur messtechnischen Erfassung der Körnerbeladung des Transport- und/oder Abscheideluftstromes eines Mähdreschers und der strömungsmechanischen Kenngrößen der gasförmigen Phase. Unter Mehrphasenströmung, insbesondere biogener Mehrphasenströmung, wird im Folgenden ein strömendes Luft/Pflanzenteilgemisch verstanden, in dem die Luft die gasförmige Phase und die Pflanzenteile, insbesondere die Körner, die feste Phase repräsentieren. Insbesondere können im Rahmen von Abscheidevorgängen die Phasen, auch nur teilweise, unterschiedliche Bewegungsrichtungen aufweisen.

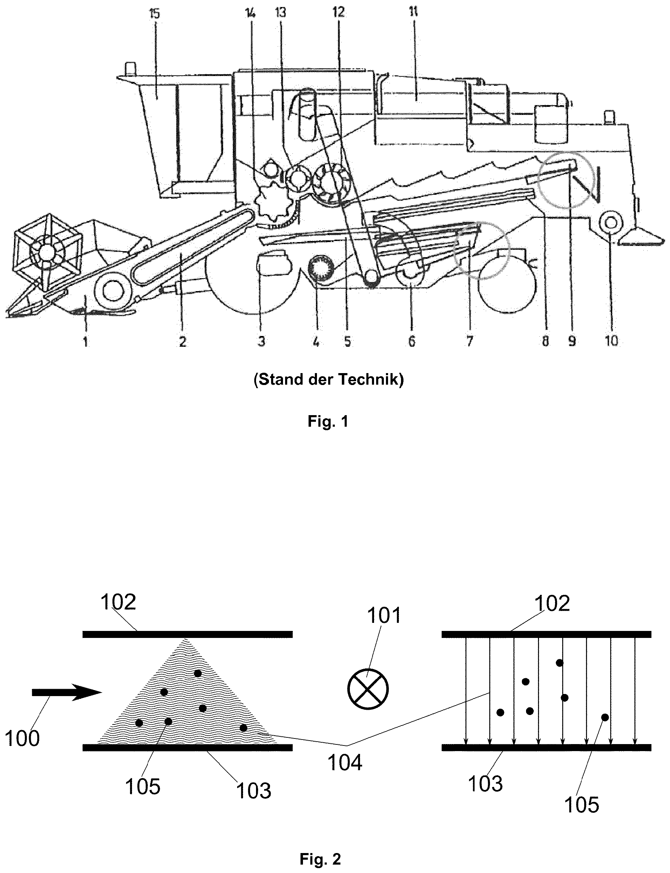

Die Beschreibung der Erfindung erfolgt am Beispiel der mobilen Arbeitsmaschine eines Mähdreschers. Die Körnerernte stellt eine wichtige Methode der Bergung landwirtschaftlicher Nutzpflanzen dar und besteht im Wesentlichen aus den Verfahrensschritten Mahd, Dreschen, Abscheidung und Reinigung. Diese Prozesskette wird nach dem Stand der Technik innerhalb eines Mähdreschers (Fig. 1) realisiert.

Heterogene Standortbedingungen der Pflanzen sowie klimatische Veränderungen über den Tagesverlauf erfordern eine ständige Anpassung der Maschinenparameter, um einen maximalen Korndurchsatz bei einem möglichst niedrigen Kornverlustniveau und die bestmögliche Auslastung des Mähdreschers auf dem befahrenen Schlag zu erreichen.

Dazu verfügt die Maschine über variable Stellgrößen (z.B. Gebläsedrehzahl, Sieböffnungsweiten, mehrere verschieden verstellbare Siebe, Dreschkorbspaltweite, Dreschtrommeldrehzahl,...), mit denen Einfluss auf Durchsatz, Drusch- und Abscheidequalität genommen werden kann.

Die Produktivität der Maschinen wird u.a. durch unvollständige Abscheidung der Körner an den Abscheideelementen Schüttler bzw. Rotor und der Reinigungseinrichtung begrenzt. Die unabgeschiedenen Körner gelangen als Verlust wieder auf das Feld. Durch die örtlich und zeitlich aufgelöste Detektion der Abscheiderate der Abscheideelemente können Messgrößen für die automatisierte Maschineneinstellung zur Verfügung gestellt werden. Wichtige Größen sind dabei der Massenstrom fester Phasen biogener Mehrphasenströmungen (z.B. Dichte des Korn-Nichtkornbestandteil-Gemisches unter den Siebe oder den Schüttlern / Rotoren, Anzahl der Körner und Nichtkornbestandteilen) sowie strömungsmechanischer Kenngrößen der gasförmigen Phase (Strömungsgeschwindigkeit, statischer Druck, ...).

In den Maschinen nach dem Stand der Technik wird die feste Phase des Korns, die von einer Funktionsbaugruppe (Schüttler, Rotor, Reinigungseinrichtung) abgeschieden wird, häufig durch piezoelektrische Sensoren oder Vibrationssensoren gemessen. Aufgrund der folgenden Nachteile können die genannten Funktionsbaugruppen eines Mähdreschers mit den existierenden Sensoren zur Messung der festen Phase nicht zuverlässig geregelt werden:
- Die Positionierung der Sensoren erfolgt im oder am Rand der Mehrphasenströmung.
- Es wird nur ein Teilbereich der festen Phase erfasst.
- Bedingt durch das existierende Messprinzip wird das Sensorsignal durch die Eigenschaften der Bestandteile der festen Phase beeinflusst.
- Messfehler durch Fremdkörper, die sich in der zu messenden festen Phase befinden, treten auf.

Eine genaue Überwachung des passierenden Gutstroms ist mit den verwendeten piezoelektrischen Sensoren nicht möglich. Die Messung der strömungsmechanischen Kenngrößen der gasförmigen Phase wird gegenwertig noch nicht realisiert.

Darüber hinaus ist eine Reihe von weiteren Methoden bekannt, die Beladung der Förderströme in Erntemaschinen mit zu nutzenden Pflanzenteilen zu ermitteln.

Die DE 10 2013 107 169 A1 schlägt vor, den Förderstrom (Erntegutstrom) mittels bildgebender Sensoren zu beobachten und den Bruchkorn- bzw. Nichtkorn-Anteil zu ermitteln. Die Ergebnisse werden sowohl visualisiert als auch zur Steuerung des Arbeitsgerätes genutzt. Nachteilig hierbei ist, dass die Bilderkennung ein aufwendiges Verfahren ist, das immer noch einer erheblichen Unsicherheit unterliegt.

In der US 2008/0171582 A1 wird vorgeschlagen, die interessierenden Pflanzenanteile optisch anzuregen, so dass diese ein spezifisches Signal abgeben. Hier ist vorgesehen, die Fluoreszenzeigenschaften der Pflanzenteile zu nutzen und diese durch Bestrahlung mit Licht in entsprechenden Wellenlängenbereichen detektierbar zu machen. Die Vorrichtung dient insbesondere dazu, den Kornverlust am Auswurf der Erntemaschine zu erfassen.

Die US 4,360,998 sieht eine Vielzahl von Sensoren auf einem Sieb vor, die unter Nutzung des Prinzips der Lichtschranke die durch das Sieb hindurchtretenden Kornmengen ermitteln. Aus der Verteilung der Kornmenge über die Länge des Siebes hinweg wird die Verlustmenge extrapoliert, die am Ende des Siebes verloren geht. Die Sensoren sind dazu matrixförmig auf dem Sieb angeordnet und übermitteln ihre Daten zu einer Rechnereinheit, die die Verlustmenge ermittelt und auch den Fahrer bei Überschreitung eines Grenzwertes informiert.

Aufgrund der unzureichenden Sensorik ist eine Regelung der variablen Stellgrößen des Mähdreschers nach dem sich ständig ändernden Trennverhalten der festen Phasen (Korn und Nichtkornbestandteile) innerhalb des Mähdreschers nur unzureichend möglich. Problematisch ist häufig auch die Verschmutzungsneigung von Sensoren. Um Mähdrescher zuverlässig nach den vorliegenden Phasen regeln zu können sind daher neue Sensoren bzw. Sensorkonfigurationen notwendig.

Gegenstand der Druckschrift US 6 591 145 B1 ist ein System und Verfahren zur autonomen Steuerung von landwirtschaftlichen Maschinen, wie einem Getreidemähdrescher. Der Betrieb des Mähdreschers kann durch Verwendung der von unterschiedlichen Sensoren bereitgestellten Informationen optimiert werden. Das System umfasst u. a. Sensoren, die den Kornverlust über die von den Kornkernen emittierten Wellenlängen erfassen. Dazu sind in Reihen angeordnete Sensoren vorgesehen, die die Dichtenverteilung der strömenden Körner in den überwachten Flächen des Siebe ermitteln.

Weitere relevante Konstruktionen sind US 4 360 998 A, der EP 2 401 906 A1 oder der US 2016/000008 A1 zu entnehmen.

Es stellt sich die Aufgabe, die Kornbeladung verschiedener Förderströme in einer Erntemaschine, insbesondere einem Mähdrescher, möglichst vollständig zu erfassen, um eine optimale Steuerung der Erntemaschine gewährleisten zu können und die Kornverluste möglichst gering zu halten. Darüber hinaus hat es sich als vorteilhaft erwiesen, neben der Körnermenge auch weitere strömungstechnische Kenngrößen zu erfassen, um eine optimale Steuerung der Erntemaschine zu ermöglichen. Auch die Messung dieser Kenngrößen soll Bestandteil der erfindungsgemäßen Lösung sein.

Erfindungsgemäß wird die Aufgabe mit einer Sensoreinheit nach Anspruch 1 gelöst. Vorteilhafte Ausführungsformen sind in den rückbezogenen Unteransprüchen offenbart. Die erfindungsgemäße Sensoreinheit zur Messung des Massestromes der festen Phasen biogener Mehrphasenströmungen sowie strömungsmechanischer Kenngrößen der gasförmigen Phase weist mindestens die folgenden Merkmale auf:
1. In der Sensoreinheit sind die Geber (Wandler) zur Messung der festen Phasen biogener Mehrphasenströmung und von strömungsmechanischen Kenngrößen der gasförmigen Phase örtlich in einem Gehäuse zusammengefasst.
2. Die Messung der festen Phase biogener Mehrphasenströmung erfolgt bevorzugt transmissiv, wobei das Signal gedämpft und / oder unterbrochen wird (Fig. 2). Dazu ist die Sensoreinheit in einer strömungstechnisch günstigen Form, bspw. der eines Kiels bzw. einer Finne mit abgerundeter und von der Oberfläche der Befestigungsebene der Sensoreinheit weg gekrümmt verlaufender Anströmkante, ausgeführt. Die Sensoreinheit ist bevorzugt so angeordnet, dass Ihre Seitenwände senkrecht oder zumindest annähernd senkrecht verlaufen. Der Kiel wendet dabei dem angreifenden Luftstrom seine schmalste Seite, die Anströmkante, zu und verläuft in seiner Längserstreckung parallel zum Luftstrom. So wird vorteilhaft eine möglichst geringe Beeinflussung der Strömung durch die Sensoreinheit erreicht. Durch spezielle Maßnahmen (Stolperdraht, Turbulatoren) wird eine turbulente Grenzschicht erzeugt. Durch die Turbulenz erhöht sich der Impulsaustausch. Hierdurch wird die Strömung in Wandnähe energiereicher und kann der Profilkontur leichter folgen. Eine Ablöseblase der Strömung wird so verhindert und der Wärmeaustausch begünstigt. Die Sensoren zur Messung der festen Phase der biogenen Mehrphasenströmung sind dabei bevorzugt seitlich an der kielartigen Sensoreinheit angeordnet. Bevorzugt sind die Sensoren dabei als Licht, besonders bevorzugt Laserlicht, oder eine andere Art von elektromagnetischer Strahlung, abgebende (Sender) und/oder empfangende (Empfänger) Vorrichtung ausgeführt. Als geeignete Sender von elektromagnetischer Strahlung werden bevorzugt LEDs, Laserdioden, Halogenlampen oder Gasentladungslampen eingesetzt. Bevorzugt ist die elektromagnetische Strahlung als Lichtgitter, flächig gebündeltes Licht oder Lichtschranke ausgeführt. Geeignete Empfänger sind bspw. Fotodioden, Fototransistoren oder CMOS- bzw. CCD-Zeilen oder auch CMOS bzw. CCD-Flächen. Die Sender senden ein Signal aus, dessen Schwächung oder Unterbrechung registriert und ausgewertet wird. Bevorzugt sind die Sensoren (Sender und Empfänger) hinter Schutzscheiben angeordnet, die vorzugsweise fugenlos mit den Oberflächen der Seitenwände der Sensoreinheit abschließen. Diese Schutzscheiben sind für die ausgehende bzw. einfallende elektromagnetische Strahlung zumindest teilweise (mehr als 50% der elektromagnetischen Strahlung tritt durch die Schutzscheiben hindurch) transparent. Bei Sensoreinheiten, die als Reflektor dienen sollen, sind die Schutzscheiben zumindest teilweise versiegelt oder im Inneren des Gehäuses, hinter den Schutzscheiben ist eine (oder mehrere) spiegelnde Fläche angeordnet. Für Transmissionsmessungen wird die Schwächung bzw. Unterbrechung des Strahlenweges zwischen zwei Sensoren gemessen. Dazu werden zwei Sensoreinheiten in der Mehrphasenströmung angeordnet oder es wird ein entsprechender Sensor (Sender oder Empfänger, komplementär zum Empfänger oder Sensor der anderen Sensoreinheit) in der Wandung des Strömungskanals der Erntemaschine angeordnet. Reflexionsmessungen sehen vor, dass die elektromagnetische Strahlung von den Partikeln in der Mehrphasenströmung gestreut und so geschwächt wird. Die rückgestreute elektromagnetische Strahlung (Streulicht) wird in derselben Sensoreinheit erfasst, von der sie ausgesandt wurde. Dazu weist die Sensoreinheit sowohl Sender als auch Empfänger auf. Die Reflexion kann durch einen gegenüber Sender/Empfänger angeordneten Reflektor erhöht werden. Dann durchquert das Messsignal, den zu messenden Strom ein zweites Mal. Eine bevorzugte Ausführungsform sieht die Kombination von Transmisions- und Streumessung vor. Dabei werden die Signale von Empfängern, in der das Signal aussendenden Sensoreinheit und von einem (oder mehreren) Empfängern in einer beabstandet, bevorzugt parallel, zu der das Signal aussendenden Sensoreinheit angeordneten Einheit (bzw. der Wandung), erfasst. In einer bevorzugten Ausführungsform weist eine Sensoreinheit mehrere Sensoren zum Senden bzw. Empfangen elektromagnetischer Strahlung auf, die mit unterschiedlichem Abstand von der Befestigungsseite der Sensoreinheit oder von der Anströmkante angeordnet sind. Dies ermöglicht die Erfassung eines Profils des Körnerflusses. Bei geringer Körnerbeladung des Förderluftstromes ist optional auch eine Einzelkornerfassung möglich.

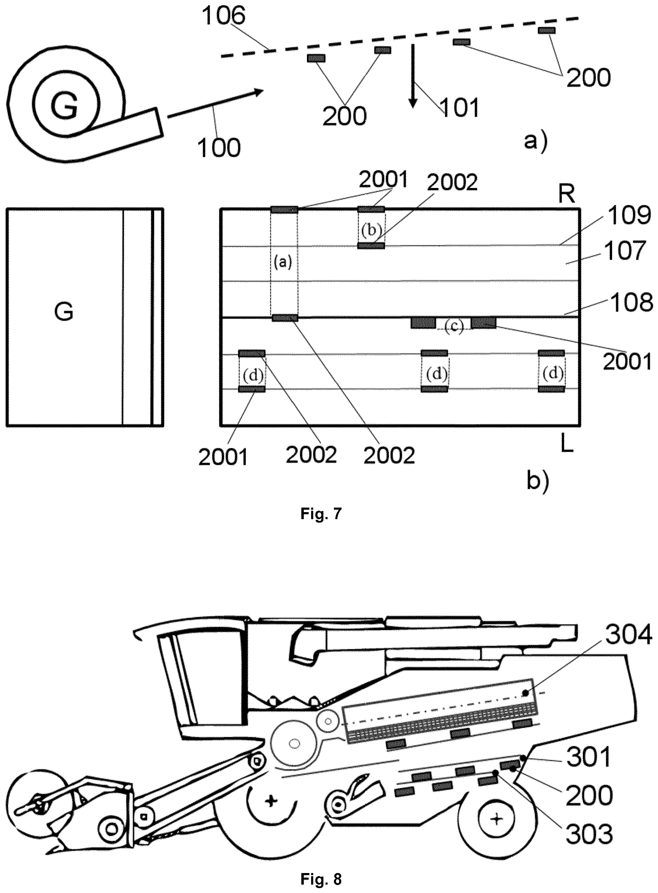

Weitere Ausgestaltungen der erfindungsgemäßen Sensoreinheit sehen die folgenden Merkmale vor:
3. Optional weist die Sensoreinheit eine Sensorspitze auf, die in Verlängerung der zur Befestigungsebene parallel verlaufenden Oberkante oder direkt aus der gekrümmt verlaufenden Anströmkante hinausragt und der Mehrphasenströmung entgegen gerichtet ist. Die Sensorspitze ist vorzugsweise kreiskegelförmig geformt. Der vordere Bereich des Kegels trägt einen oder mehrere Sensoren zur Messung der Strömungsgeschwindigkeit, vorzugsweise einen oder mehrere Heißfilmsensoren. Der vordere Kegelbereich besteht bevorzugt aus sehr gut wärmeleitendem Material (bspw. Metall, vorzugsweise Aluminium oder Kupfer) so dass die Heißfilmsensoren vorzugweise innerhalb des vorderen Kegelbereichs untergebracht werden können und damit ein Schutz gegen Umwelteinflüsse besteht. Optional können die Heißfilmsensoren auf der Oberfläche des vorderen Kegelbereichs befestigt werden Vorteilhaft kommt es durch diese Ausgestaltung als Sensorspitze nicht zur Ausbildung eines Staupunktes der Strömung, was für die Genauigkeit und Sensitivität der Messung förderlich ist. Die Neigung der Symmetrieachse der kreiskegelförmigen Sensorspitze gegen die Befestigungsebene liegt bevorzugt im Bereich von 0° bis 60°, besonders bevorzugt im Bereich von 0° bis 45° und ganz besonders bevorzugt bei ca. 30°.
4. Die Messung der strömungsmechanischen Kenngrößen der gasförmigen Phase erfolgt vorzugsweise durch Messung des statischen Drucks, bevorzugt mit Absolutdrucksensoren, und der Messung der Strömungsgeschwindigkeit, bevorzugt durch die Heißfilm-Anemometrie. Die Heißfilm-Anemometrie basiert dabei auf der wärmeabführenden Wirkung eines vorbeifließenden Mediums (hier: der Luftströmung des Förderluftstroms). Die Absolutdrucksensoren weisen bevorzugt eine Membran auf, die fugenlos und mit der Oberfläche der Sensoreinheit abschließend, in der Sensoreinheit, vorzugsweise an deren Seite, angeordnet ist. Die Membran wirkt dann auf Drucksensoren nach dem Stand der Technik ein (bspw. piezoelektrische Sensoren). Es sind jedoch auch andere Sensorkonstruktionen nach dem Stand der Technik möglich. Neben der Heißfilm-Anemometrie sind auch andere Messverfahren zur Strömungsgeschwindigkeitsmessung möglich. Dem Fachmann ist bekannt, dass die Sensoren zur Messung der Strömungsgeschwindigkeit, je nach Messprinzip, in den Seitenwänden der Sensoreinheit oder aber in der Anströmkante anzuordnen sind. Beim Einsatz von Sensoren zur Messung der Strömungsgeschwindigkeit mittels Heißfilm-Anemometrie sind bevorzugt jeder Seite der Sensoreinheit mindestens ein Sensor angeordnet. Aus der Differenz der Messungen auf den entgegengesetzten Seiten der Sensoreinheit lässt sich auf die Strömungsrichtung schließen. Bei optionalem Vorhandensein einer Sensorspitze an der Sensoreinheit sind die Sensoren zur Messung der Strömungsgeschwindigkeit bevorzugt ausschließlich oder auch an dieser angeordnet, ganz besonders bevorzugt an dem vorderen Ende der Spitze, wo die Sensoren unmittelbar der entgegenkommenden Mehrphasenströmung ausgesetzt sind. In einer besonders bevorzugten Ausführungsform sind zwei oder mehr gleichartige Strömungssensoren an der Spitze angeordnet, so dass aus unterschiedlichen Messergebnissen der Sensoren auf die Strömungsrichtung geschlossen werden kann. Wesentlich ist jedoch, dass die dabei ggf. vorliegenden Öffnungen in der Sensoreinheit sich nicht zusetzen können bzw. dass Messverfahren zur Anwendung gelangen, bei denen keine Öffnungen notwendig sind. Optional können weitere Sensoren vorgesehen sein, so insbesondere ein oder mehrere Temperatursensoren.
5. Das Gehäuse der Sensoreinheit ist strömungstechnisch derart geformt, dass keine (bzw. nur eine geringe) bzw. nur außerhalb des Messbereichs liegende Strömungsablösung stattfindet. Durch die spezielle Gehäusegestaltung ist die Winkelsensitivität der Sensoreinheit bezüglich der Messung der Strömungsgeschwindigkeit und des statischen Druckes gering. Eine Winkelunabhängigkeit von ±45° bezogen auf die Sensorquerachse und ±10° bezüglich der Sensorhochachse wird erreicht. Das Gehäuse besteht bevorzugt aus Kunststoff. Es sind jedoch auch andere Gehäusematerialien wie bspw. Edelstahl oder Aluminium möglich.
6. Das Gehäuse der Sensoreinheit ist vorteilhaft derart geformt, dass im Bereich der Sensoren keine Gebiete reduzierter Strömungsgeschwindigkeiten (Strömungsablösung, "Totwassergebiet", Rezirkulationen) auftreten, wodurch Ablagerungen von Staub u.ä. vermieden bzw. diese entfernt werden. Die Gestaltung der äußeren Form der Sensoreinheit wird mittels computergestützter Simulationsverfahren aus dem Stand der Technik so optimiert, dass die strömungstechnischen Zielstellungen (möglichst keine Strömungsablösung, möglichst keine Gebiete reduzierter Strömungsgeschwindigkeiten) erreicht werden.
7. Die Gestaltung und Positionierung der Sensoreinheit erfolgt möglichst nichtinvasiv und ohne Rückwirkung bezogen auf die feste biogene Phase der Mehrphasenströmung. Dies wird erreicht, indem bevorzugt die bereits beschriebene Kiel-Form der Sensoreinheit gewählt wird. Die Kiel-Form weist optional an der von der Befestigungsebene entfernten Kante oder der Anströmkante selbst eine über die Anströmkante hinausragende Sensorspitze auf, die der ankommenden Strömung entgegen gerichtet ist. Die Sensoreinheit wird bevorzugt so in die Mehrphasenströmung eingebracht, dass die Anströmkante dem Luftstrom entgegengerichtet und die Längserstreckung der Sensoreinheit parallel zur Strömungsrichtung der Luft gerichtet ist. Bei einer Anordnung unterhalb einer Siebeinheit, bewegen sich die Körner der Schwerkraft folgend und werden von der Vertikalen lediglich durch die Einwirkung des im Wesentlichen rechtwinklig dazu verlaufenden Luftstromes abgelenkt, der eine Windsichtung des Körnerstroms bewirkt. Auf diese Weise wird die Breitseite der Sensoreinheit vorteilhaft nicht von den Körnern getroffen. Auch eventuell im Fördergut enthaltene Steine und sonstige Beimengungen bewegen sich parallel zu den Seitenwänden der Sensoreinheit, die damit einem geringeren Verschleiß unterliegt und wodurch eine direkte Beeinträchtigung der Sensoren, die vorzugsweise und mit Ausnahme der Strömungsgeschwindigkeitssensoren, in der Seitenwand angeordnet sind, vermieden wird. Die Sensoreinheiten werden bevorzugt unterhalb der Trennebene angeordnet, die sich aus der Position des Siebes ergibt. Dabei kommt mindestens eine Sensoreinheit zum Einsatz, die vorzugsweise mittig angeordnet ist und maximal den Abstand zwischen einer Maschinenseite und der Mitte der Maschine überwachen kann (Fig. 7). Bei Ausrüstung der Sensoreinheit mit Sensoren zum Senden bzw. Empfangen von elektromagnetischer Strahlung kann die gesamte Maschinenbreite überwacht werden. Bevorzugt ist jedoch die Nutzung mehrerer parallel angeordneter Sensoren über die Breite der Maschine, so dass ein Strömungsprofil erfasst werden kann. Die dadurch mögliche Messung der Verteilung quer zur Förderrichtung dient vorteilhaft der Ermittlung der Querverteilung und der Erhöhung der Stützstellendichte für den Regelalgorithmus. In einer besonders bevorzugten Ausführungsform werden Strömungsprofil und Abscheidekurve über die Länge der Abscheidefläche aufgenommen und die Sensoren auch dementsprechend angeordnet. Prinzipiell ist die Anordnung von Sensoren in jedem Muster möglich, dass zur Optimierung des Abscheidevorganges sinnvoll erscheint.
8. Bevorzugt befindet sich in der Sensoreinheit eine Auswerteeinheit zur Verarbeitung und Übertragung der gemessenen Größen. Optional werden die Messwerte an eine externe Auswerteeinheit übermittelt und erst dort verarbeitet. Die Prozesskenngrößen werden vorzugsweise innerhalb des Sensors aus den gemessenen Größen ermittelt, jedoch ist auch eine vollständige externe Verarbeitung möglich.
9. Das Ausgangssignal der Sensoreinheit wird vorzugsweise über mindestens einen Datenbus (CAN, LIN,...) zur weiteren Verarbeitung übermittelt. Weiterhin bevorzugt ist eine drahtlose Datenübermittlung. Die weitere Verarbeitung erfolgt bevorzugt in einer zentralen Datenverarbeitungseinheit der Erntemaschine. Weiterhin bevorzugt ist die zentrale Datenverarbeitung in einer mobilen oder stationären Steuereinheit, die die Daten mehrerer Erntemaschinen empfängt, verarbeitet und Steuerdaten für die Erntemaschinen ermittelt und zu diesen überträgt. Die Übertragung erfolgt hier bevorzugt drahtlos.
10. Das Gehäuse der Sensoreinheit ist bevorzugt derart gestaltet, dass die Sensoreinheit mit oder ohne Komponenten zur Generierung von elektrischer Leistung aus der Schwingbewegung der Sensoreinheit ausgestattet sein kann. Die Energiegewinnung aus den Rüttelbewegungen wird mit bekannten Methoden zum "energy harvesting" aus dem Stand der Technik erreicht. Bei Sensoreinheiten, die an stationären Wandungen der Erntemaschine angeordnet sind, kann die Energieversorgung auch mittels herkömmlicher Leitungsführung für elektrische Zuleitungen erfolgen. Es ist optional auch möglich, die Stromversorgung und die Datenübertragung über dieselben Leitungen zu führen.
11. In einer bevorzugten Ausführungsform sind zwei oder mehr Sensoreinheiten in gemeinsamen Befestigungsvorrichtungen angeordnet. Diese Befestigungsvorrichtungen erlauben das schnelle Auswechseln defekter Sensoreinheiten. Sie sind darüber hinaus bevorzugt dazu ausgelegt, die Sensoreinheiten mit Energie zu versorgen und/oder die Datenverbindung zu einer zentralen Datenverarbeitungsvorrichtung herzustellen. Darüber hinaus gewährleistet die Anordnung in Befestigungsvorrichtungen, dass die Positionierung der Sensoreinheiten unverändert bleibt und auch nach dem Auswechseln einer oder mehrerer Sensoreinheiten in einer gemeinsamen Befestigungsvorrichtung keine aufwendigen Justierungen zur Herstellung der optischen Verbindung zwischen den Sensoreinheiten notwendig ist. In einer besonders bevorzugten Ausführungsform sind die beiden Teile der Befestigungsvorrichtung, die Sensoreinheiten aufnehmen derart gegeneinander verschiebbar, dass der Abstand der Sensoreinheiten ohne Änderung der Sensorausrichtung, d. h. ohne die Notwendigkeit nachträglicher Justierung, verändert (eingestellt) werden kann. Dazu ist bspw. die Verbindung der Sensoreinheiten teleskopierbar bzw. diese sind auf einer gemeinsamen Tragschiene verschiebbar. Die Einstellung erfolgt bevorzugt, indem die Befestigungsvorrichtung mit dem vorgesehenen Abstand der Sensoreinheiten montiert wird. Eine weitere bevorzugte Ausführungsform sieht jedoch die motorgetriebene Verstellbarkeit des Anstandes der Sensoreinheiten vor. Im zweiten Fall erfolgt die Verstellung vorzugsweise gesteuert durch die Datenverarbeitungsvorrichtung. Die Befestigung in den Befestigungsvorrichtungen erfolgt in einer bevorzugten Ausführungsform, indem die Sensoreinheiten in Aussparungen der Befestigungsvorrichtungen eingesetzt werden, welche die Befestigungskonsolen der Sensoreinheiten formideal aufnehmen. und dort lösbar arretiert werden. Die Arretierung erfolgt bspw. mittels Schrauben, Klemmverschlüsse oder ähnlicher Vorgehensweisen aus dem Stand der Technik. Bevorzugt wird mit dem Einsetzen der Sensoreinheiten in die Aussparungen auch die Energie- und Datenverbindung hergestellt. Auch hier kommen bekannte Vorgehensweisen zum Einsatz.
   Eine bevorzugte Ausführungsform sieht eine Befestigungsvorrichtung mit einer einzelnen Aussparung zur Aufnahme einer einzelnen Sensoreinheit vor. Sie Sensoreinheit ist in der Aussparung lösbar befestigt. Dies gestattet das schnelle Auswechseln der Sensoreinheit. Beim Einsetzen der Sensoreinheit in die Aussparung wird auch die Energie- und Datenverbindung zur Sensoreinheit hergestellt.
12. Mehrere Sensoren einer Erntemaschine (Mähdrescher) bilden bevorzugt ein rechnergestütztes Netzwerk zur Bereitstellung neuer Regelgrößen für die Erntemaschine.

Die erfindungsgemäßen Sensoren werden vorteilhaft in der Erntemaschine an den Positionen eingesetzt werden, an denen eine Abscheidung erfolgt.

Die erfindungsgemäße Sensoreinheit ermöglicht es, bei Einsatz mehrerer erfindungsgemäßer Sensoreinheiten in der Erntemaschine, sowohl die Anzahl der Körner oder ein mit der Dichte des Körnerstromes korrelierendes Signal zu ermitteln, als auch, in welchem Maschinenteil bzw. welchem Siebabschnitt die Abscheidung erfolgt. Darüber hinaus kann ermittelt werden, wieviel Körner bzw. sonstiges Pflanzenmaterial an welcher Stelle der Erntemaschine durchgesetzt wird. Diese Informationen können zu einer Vergleichmäßigung und Optimierung der Strömungsverteilung in der Erntemaschine genutzt werden. Weiterhin dienen die Informationen der Sensoreinheiten dazu, die Maschineneinstellungen, bspw. die Motordrehzahl, die Siebweite und Ähnliches, zu steuern oder zu regeln.

Insbesondere ist es nunmehr möglich, zu erfassen, wie viele nutzbare Pflanzenteile (Körner) die Erntemaschine verlassen, ohne abgeschieden worden zu sein (direkte Verlustermittlung).

In einer ersten bevorzugten Ausführungsform werden mehrere über die Länge des Siebes verteilte Sensoren verwendet. Dabei wird zunächst die Abscheidekurve aus den Messwerten generiert, und dann werden über ein Modell die Verluste berechnet. Es handelt sich somit um eine indirekte Verlustermittlung.

In einer zweiten bevorzugten Ausführungsform wird nur eine Sensoreinheit am Ende der Abscheidefläche eingesetzt. Damit werden die Verluste direkt aus den Messwerten berechnet/in Korrelation gebracht.

Weiterhin vorteilhaft ist es möglich, auch die Druckverhältnisse während des Anfahrvorganges der Erntemaschine zu erfassen. Dazu werden bevorzugt Differenzdruckmessungen zwischen den Drucksensoren einzelner Sensoreinheiten ausgewertet. Die Messung der Druckverhältnisse vor dem Anfahrvorgang dient dabei zur Kalibrierung der Sensoren auf den Umgebungsdruck. Der Absolutdruck wird bevorzugt zur Charakterisierung des Strömungswiderstandes der Gutschicht verwendet und korreliert mit der Beladung (Durchsatz) der Reinigungseinrichtung.

### Figuren

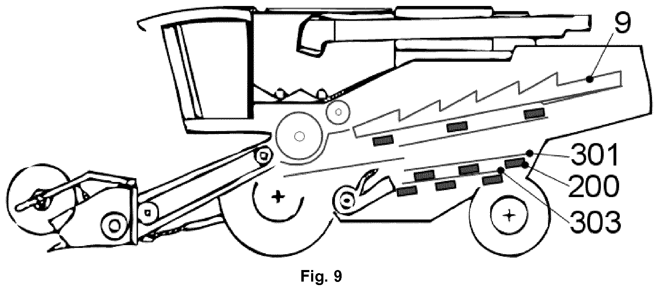

**Fig. 1** zeigt die Sensoranordnungen (eingekreiste Bereiche) in einem Mähdrescher nach dem Stand der Technik. Hier sind Sensoren in den Austrittsbereichen der Erntegutabscheidung angeordnet, die den Verlust erfassen sollen.
**Fig. 2** zeigt die prinzipielle Anordnung der Sensoreinheiten (Sender und Empfänger) und deren Positionierung im Bezug zu den Bewegungsrichtungen der festen 101 und gasförmigen 100 Phasen. Die Partikel 105 werden in dem Laserfeld 104 der sendenden Sensoreinheit 102 beleuchtet und in der empfangenden Sensoreinheit 103 detektiert.

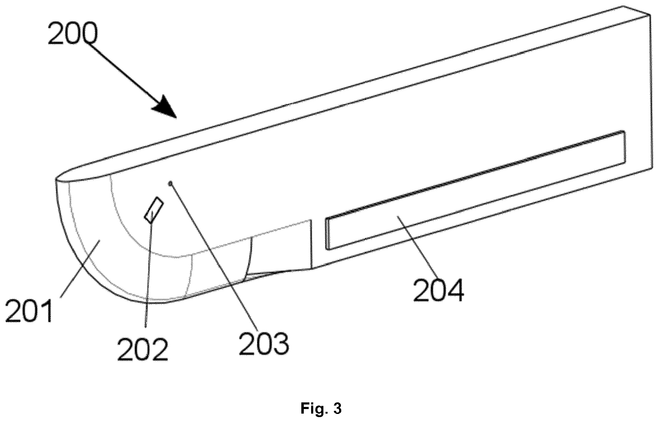

**Fig. 3** zeigt die prinzipielle Ausführung der erfindungsgemäßen Sensoreinheit 200. Gut erkennbar ist die kielförmige Gestaltung der Sensoreinheit 200 mit der Anströmkante 201, die der Bewegung der gasförmigen Phase zugewandt ist. Die dargestellte Sensoreinheit 200 weist darüber hinaus einen Heißfilmsensor 202 zur Bestimmung der Strömungsgeschwindigkeit und einen Drucksensor 203 zur Ermittlung des statischen Druckes auf. Der optische Sensor 204 ist streifenförmig ausgeführt.

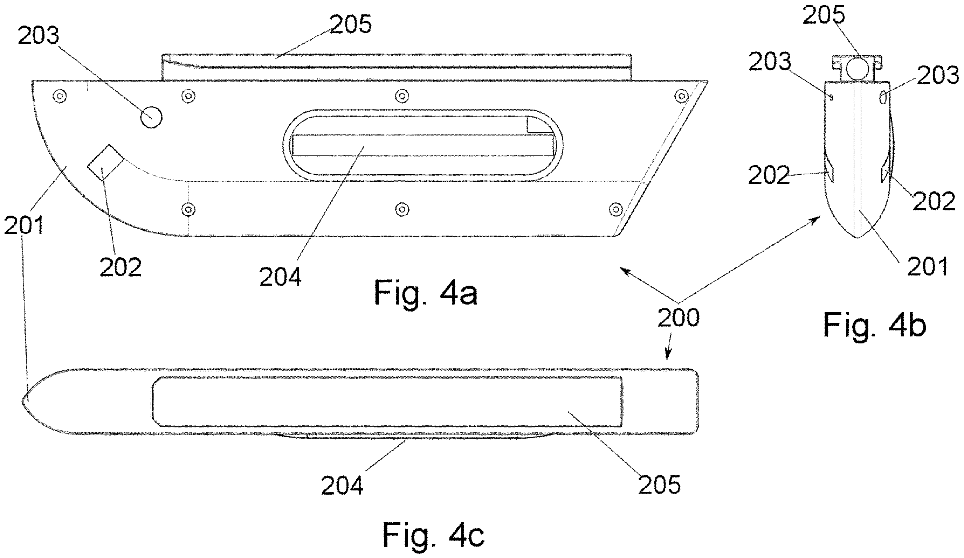

**Fig. 4a** bis **Fig. 4c** zeigen die erfindungsgemäße Sensoreinheit 200 schematisch in drei Ansichten, Seitenansicht (Fig. 4a), Vorderansicht (angeströmte Kante - Fig. 4b) und Draufsicht (Montageseite - Fig. 4c). Diese Ausführungsform weist eine Befestigungskonsole 205 auf, mittels der die Sensoreinheit 200 in eine Befestigungsvorrichtung 207 eingesetzt und dort arretiert werden kann.

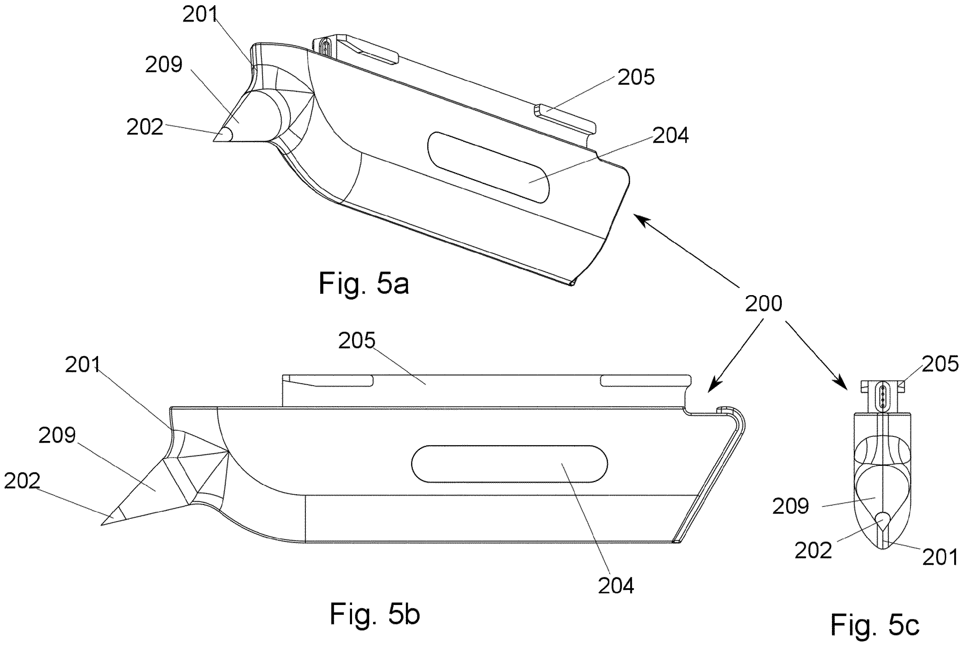

In **Fig. 5a** bis **Fig. 5c** zeigt eine bevorzugte Ausführungsform der erfindungsgemäßen Sensoreinheit 200 schematisch in drei Ansichten, 3D-Ansicht (Fig. 5a), Seitenansicht (Fig. 5b) und Vorderansicht (angeströmte Kante - Fig. 5c). Die vorliegende Ausführungsform weist gegenüber der Ausführungsform aus Fig. 4 eine Sensorspitze 209 auf, wobei der vordere Bereich aus sehr gut wärmeleitendem Material beschaffen ist und den Heißfilmsensor 202 im Inneren oder an dessen Oberfläche trägt

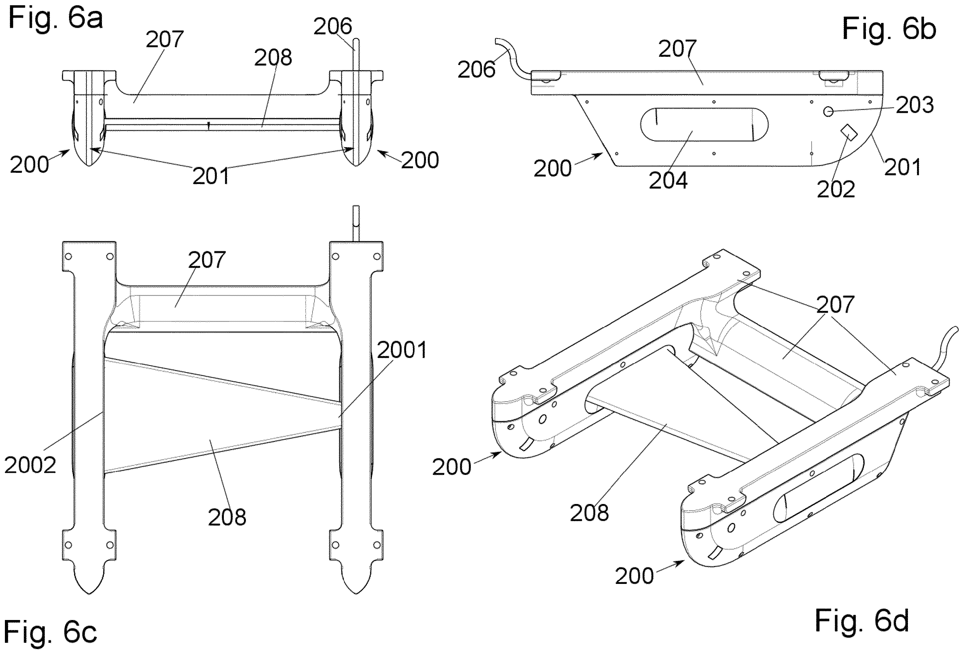

In **Fig. 6a** bis **Fig. 6d** ist schematisch die Anordnung von zwei Sensoreinheiten 200 in einer gemeinsamen Befestigungsvorrichtung 207 dargestellt. Die Figuren zeigen die Anordnung in Vorderansicht Fig. 6a), Seitenansicht (Fig. 6b), Draufsicht (Montageseite - Fig. 6c) sowie perspektivisch (Fig. 6d). Der Strahlengang 208 zwischen den optischen Sensoren (Sender 2001 und Empfänger 2002) der beiden Sensoreinheiten 200 ist schematisch in den Figuren Fig. 6c und Fig. 6d dargestellt.
**Fig. 7** zeigt schematisch Anordnungsvarianten der erfindungsgemäßen Sensoreinheiten 200 unter einer Siebeinheit 106 in Seitenansicht (a)) und von unten gesehen (b)). Diese überwachen bspw. eine Hälfte der Siebbreite - Anordnung (a), oder nur ein Segment 107, wie in Anordnung (b). Die Segmente entstehen, wenn das Sieb in streifenförmige, parallel zur Strömungsrichtung der Luft verlaufende, Abschnitte aufgeteilt wird. In den Anordnungen (a) und (b) arbeitet jeweils eine Sensoreinheit als Sender/Empfänger 2001 oder als Empfänger/Reflektor 2002. Anordnung (c) zeigt den Einsatz von Sensoreinheiten 2001, die als Sender und Empfänger 2001 arbeiten, in der Mitte der Siebbreite, die jedoch lediglich die rückgestreute elektromagnetische Strahlung erfassen und nicht einen Bereich zwischen zwei Sensoreinheiten 200 überwachen. Die Anordnung (d) gestattet es, die Änderungen der Flussdichten in einem Segment mittels in Richtung der Strömung der gasförmigen Phase hintereinander geschalteten Paaren von Sensoreinheiten 2001, 2002 zu überwachen. Die Segmente 107 sind von Stegen 109 getrennt, unter denen bevorzugt die Sensoreinheiten 2001, 2002 angeordnet sind. Soll lediglich der Korbverlust erfasst werden, ist es meist ausreichend, ein Sensoreinheitenpaar je Maschinenseite vorzusehen. Zur differenzierten Steuerung der Kornabscheidung ist es jedoch vorteilhaft, eine Anordnung nach (d) zu wählen.
Die Figuren **Fig.8** und **Fig. 9** zeigen bevorzugte Positionen von Sensoreinheiten 200 bei Mähdreschern mit Hordenschüttler 305 (Fig. 8 oder Rotor 304 (Fig. 9). Unter dem Hordenschüttler 305 bzw. Rotor 304 werden dabei mindestens zwei, bevorzugt drei oder mehr Sensoreinheiten 200 angeordnet. Unter dem Obersieb 301 und/oder dem Untersieb 302 sind ebenfalls mindestens zwei, bevorzugt drei oder mehr Sensoreinheiten 200 vorgesehen.

### Ausführungsbeispiel

Das folgende Ausführungsbeispiel erläutert Aufbau und Einsatz der erfindungsgemäßen Sensoreinheit, ohne jedoch die Erfindung auf dieses Beispiel zu beschränken.

Die erfindungsgemäßen Sensoreinheiten werden in diesem Ausführungsbeispiel paarweise, in definiertem Abstand der ersten und der zweiten Sensoreinheit zueinander, genutzt. Die Sensoreinheiten weisen dazu Konsolen auf, mittels derer sie in den Aussparungen der Befestigungsvorrichtung gehalten werden. Mit dem Einsetzen der Sensoreinheitenkonsolen in die Befestigungsvorrichtung wird auch der Kontakt zur elektrischen Energieversorgung und zum Datenaustausch mittels der in den Befestigungsvorrichtungen angeordneten Steckverbinder bzw. deren Gegenstücken in den Konsolen hergestellt. Die Sensoreinheiten sind 258 mm lang (größte Ausdehnung) und weisen eine Höhe von 60 mm auf. Die Dicke beträgt maximal 25 mm. Die Sensoreinheiten sind aus dem spritzgussgeeigneten Kunststoff Ultramid A3X2G5sw23187 gefertigt. Das lichtdurchlässige Material der Scheibe des optischen Sensors ist Makrolon 550115. Die Abmessungen der Scheibe betragen ca, 100 mm x 30 mm. Die Scheibe ist zur Vermeidung von Spannungen an den Ecken abgerundet. Die Anlaufkante der Sensoreinheit weist einen Krümmungsradius von 60 mm von der Basislinie (Kante, an der die Sensoreinheit aufsitzt) zur Kiellinie (parallel zur Basislinie verlaufende Kante der Sensoreinheit) auf. Die Ausformung der Anlaufkante wurde mittels einer computergestützten mathematischen Simulation bestimmt.

Die beiden Kiellinien der Sensoreinheiten verlaufen parallel zueinander und weisen einen Abstand von 250 mm auf.

Als Sensoren sind ein Sender für elektromagnetische Strahlung, ein Heißfilmsensor zur Messung der Strömungsgeschwindigkeit sowie ein Drucksensor zur Messung des statischen Drucks in der ersten Sensoreinheit angeordnet.

Die zweite Sensoreinheit weist einen Empfänger für elektromagnetische Strahlung, insbesondere die von der ersten Sensoreinheit ausgesandte Strahlung auf. Darüber hinaus sind ebenfalls ein Heißfilmsensor zur Messung der Strömungsgeschwindigkeit sowie ein Drucksensor zur Messung des statischen Drucks enthalten.

Paare der erfindungsgemäßen Sensoreinheit sind in der Erntemaschine an den folgenden Stellen angeordnet:
∘ Bestückung 1: mehrere Sensoreinheitenpaare entlang des Untersiebes der Reinigungseinrichtung dienen der Ermittlung der Abscheidekurve (indirekte Verlustermittlung),
∘ Bestückung 2: mehrere Sensoreinheitenpaare entlang des Obersiebes der Reinigungseinrichtung ermitteln ebenfalls die Abscheidekurve für die indirekte Verlustermittlung,
∘ Bestückung 3: ein Sensoreinheitenpaar misst über die Breite des Untersiebes der Reinigungseinrichtung und dient so der Bestimmung der Querverteilung (z.B. Korrektur des Hangeinflusses, Regelung gleichmäßiger Querverteilung),
∘ Bestückung 4: ein Sensoreinheitenpaar misst über die Breite des Obersiebes der Reinigungseinrichtung und dient so der Bestimmung der Querverteilung (z.B. Korrektur des Hangeinflusses, Regelung gleichmäßiger Querverteilung),
∘ Bestückung 5: mehrere Sensoreinheitenpaare messen entlang der Abscheideeinrichtung (Schüttler / Rotor) die Querverteilung (z.B. für Korrektur des Hangeinflusses, Regelung gleichmäßiger Querverteilung),
∘ Bestückung 6: mehrere Sensoreinheitenpaare messen hinter dem Obersieb (Reinigungsübergang) und ermöglichen damit eine direkte Verlustermittlung,

### Bezugszeichenliste

- 1: Schneidwerk
- 2: Schrägförderer
- 3: Hangausgleich
- 4: Querstromgebläse
- 5: Vorbereitungsboden
- 6: Wurfelevator, -Überkehr
- 7: Siebkasten
- 8: Rücklaufboden
- 9: Schüttler
- 10: Häcksler
- 11: Motor
- 12: Separatortrommel
- 13: Strohleittrommel
- 14: Dreschtrommel
- 15: Fahrerkabine

Eingekreiste Details in Fig. 1: Bereiche, in denen Kornverlustsensoren im Stand der Technik positioniert sind
- 100: Förderrichtung der gasförmigen Phase
- 101: Förderrichtung der festen Phase
- 102: sendende Sensoreinheit
- 103: empfangende Sensoreinheit
- 104: Laserfeld
- 105: Körner
- 106: Trennebene (Sieb)
- 107: Segment
- 108: Mitte der Reinigung (Reinigungseinrichtung)
- 109: Steg zwischen den Segmenten

- 200: Sensoreinheit
- 2001: Sender/Empfänger
- 2002: Empfänger/Reflektor
- 201: speziell geformte Anströmkante
- 202: Heißfilmsensor
- 203: Drucksensor
- 204: optischer Sensor
- 205: Befestigungskonsole
- 206: Energiezuführung/Datenleitung
- 207: Befestigungsvorrichtung für Sensorpaar
- 208: Strahlengang zwischen zwei Sensoreinheiten
- 209: Sensorspitze

- 301: Obersieb
- 303: Untersieb
- 304: Rotor
- 305: Hordenschüttler

- (a) ...(d): bevorzugte Sensorpositionen
- G: Gebläse
- L: linke Maschinenseite
- R: rechte Maschinenseite

## Patentansprüche

1. Sensoreinheit (200) zum Einsatz in einer Mehrphasenströmung aus Luft und Pflanzenteilen des Transport- und/oder Abscheideluftstromes einer Erntemaschine, wobei die Sensoreinheit (200)
a) als Sender dient und mindestens eine Vorrichtung zur Aussendung elektromagnetischer Strahlung (2002), oder
b) als Empfänger dient und mindestens eine Vorrichtung zum Empfang elektromagnetischer Strahlung (2002), oder
c) als Sender/Empfänger dient und mindestens eine Vorrichtung zur Aussendung (2001 und mindestens eine Vorrichtung zum Empfang elektromagnetischer Strahlung (2002), oder
d) als Reflektor dient und mindestens eine Vorrichtung zur Reflexion elektromagnetischer Strahlung (2002), oder
e) als Empfänger/Reflektor dient und mindestens eine Vorrichtung zum Empfang elektromagnetischer Strahlung (2002) und mindestens eine Vorrichtung zur Reflexion elektromagnetischer Strahlung (2002) aufweist, wobei die Sensoreinheit (200) mindestens eine Vorrichtung zur Erfassung von strömungsmechanischen Kenngrößen aufweist und die Vorrichtungen zur Aussendung und/oder zum Empfang und/oder zur Reflexion elektromagnetischer Strahlung (2001, 2002) zur Detektion von Körnern sowie die Vorrichtung zur Erfassung von strömungsmechanischen Kenngrößen gemeinsam in einem Gehäuse angeordnet sind und so in die Mehrphasenströmung einbringbar ist,
wobei die Anströmkante (201) des Gehäuses abgerundet, von der Oberfläche des Befestigungsebene der Sensoreinheit (200) weg verläuft, und eine Stolperdraht oder Turbulatoren an der Anströmkante angeordnet sind.

2. Sensoreinheit (200) nach Anspruch 1 a) oder c), **dadurch gekennzeichnet, dass** die Vorrichtung (2001) zur Aussendung elektromagnetischer Strahlung mindestens eine Leuchtdiode oder Laserdiode oder mindestens eine Gasentladungsröhre oder mindestens eine Halogenlampe aufweist.

3. Sensoreinheit nach Anspruch 1 b), c) oder e), **dadurch gekennzeichnet, dass** die Vorrichtung zum Empfang (2001) elektromagnetischer Strahlung mindestens eine Fotodiode oder einen Fototransistor oder eine CCD-Anordnung aufweist.

4. Sensoreinheit (200) nach Anspruch 1 d) oder e), **dadurch gekennzeichnet, dass** die Vorrichtung zur Reflexion elektromagnetischer Strahlung (2002) eine oder mehrere spiegelnde Flächen aufweist.

5. Sensoreinheit (200) nach Anspruch 1, **dadurch gekennzeichnet, dass** die Vorrichtung zur Erfassung von strömungsmechanischen Kenngrößen mindestens einen Heißfilmsensor (202) zur Erfassung der Strömungsgeschwindigkeit und/oder einen Absolutdrucksensor aufweist.

6. Sensoreinheit (200) nach einem der vorhergehenden Ansprüche, **dadurch gekennzeichnet, dass** die Sensoreinheit (200) elektronische Mittel zur Aufzeichnung, Verarbeitung und/oder Übertragung der Sensormesswerte aufweist.

7. Sensoreinheit (200) nach einem der vorhergehenden Ansprüche, **dadurch gekennzeichnet, dass** die Sensoreinheit (200) mit Komponenten zur Generierung von elektrischer Leistung aus der Schwingbewegung der Sensoreinheit ausgerüstet ist.

8. Sensoreinheit (200) nach einem der vorhergehenden Ansprüche, **dadurch gekennzeichnet, dass** das Gehäuse kielförmig ausgebildet ist.

9. Sensoreinheit (200) nach Anspruch 8, **dadurch gekennzeichnet, dass** das Gehäuse an der Anströmkante eine Sensorspitze aufweist.

10. Sensoreinheit (200) nach Anspruch 9, **dadurch gekennzeichnet, dass** in oder an der Oberfläche der Sensorspitze oder im vorderen Bereich der Sensorspitze ein oder mehrere Sensoren, bevorzugt Heißfilm-Anemometer, angeordnet sind.

11. Sensoreinheit (200) nach einem der vorhergehenden Ansprüche, **dadurch gekennzeichnet, dass** die Sensoreinheit (200) eine Konsole (205) aufweist, mittels derer sie in einer Befestigungsvorrichtung (207) lösbar befestigt werden kann.

12. Sensoreinheit (200) nach Anspruch 11, **dadurch gekennzeichnet, dass** mit der Befestigung der Sensoreinheit (200) in der Befestigungsvorrichtung (207) die Energie und Datenverbindung drahtlos oder mittels Steckverbinder hergestellt wird.

13. Sensoreinheit (200) nach Anspruch 11 oder 12, **dadurch gekennzeichnet, dass** die Befestigungsvorrichtung (207) zwei oder mehre Aussparungen zur Aufnahme von Sensoreinheiten (200) aufweist, wobei die Teile der Befestigungsvorrichtung, die Sensoreinheiten aufnehmen, derart gegeneinander verschiebbar sind, dass der Abstand der Sensoreinheiten (200) voneinander eingestellt werden kann.

14. Sensoreinheit (200) nach einem der vorhergehenden Ansprüche, **dadurch gekennzeichnet, dass** eine Sensoreinheit (200) mit einem Sender mit einer Vorrichtung (2001) zum Empfang elektromagnetischer Strahlung oder dass eine Sensoreinheit mit einem Empfänger mit einer Vorrichtung zur Aussendung elektromagnetischer Strahlung in einer Wandung des Kanals, in der die Mehrphasenströmung verläuft, elektromagnetische Strahlung zur Detektion von Körnern austauscht.

15. Verwendung von Sensoreinheiten (200) nach einem der vorhergehenden Ansprüche, **dadurch gekennzeichnet, dass** die Sensoreinheiten (200) unterhalb des Rotors (304), des Hordenschüttlers (305), des Obersiebes (301) und/oder des Untersiebes (302) der Erntemaschine angeordnet sind.

16. Verwendung von Sensoreinheiten (200) nach Anspruch 15, **dadurch gekennzeichnet, dass** unter dem Hordenschüttler (305) der Erntemaschine und/oder dem Rotor (304) der Erntemaschine mindestens zwei Sensoreinheiten (200) angeordnet sind.

17. Verwendung von Sensoreinheiten (200) nach einem der Ansprüche 15 oder 16, **dadurch gekennzeichnet, dass** das Obersieb (301) der Erntemaschine und/oder das Untersieb (302) der Erntemaschine in Segmente aufgeteilt sind, wobei einander gegenüberliegende, Sensoreinheiten (200) ein Segment und/oder mehrere Segmente überwachen.

18. Verwendung von Sensoreinheiten (200) nach einem der Ansprüche 15 bis 17, **dadurch gekennzeichnet, dass** unter Obersieb (301) der Erntemaschine und/oder Untersieb (302) der Erntemaschine mindestens zwei einander gegenüberliegende Sensoreinheitenpaare (200) hintereinander angeordnet sind, die so geeignet sind, die Änderung der Körnerabscheidung bezogen auf die Längsrichtung der Siebe, zu erfassen.

19. Verwendung von Sensoreinheiten (200) nach einem der Ansprüche 15 bis 18, **dadurch gekennzeichnet, dass** die Signale der Sensoreinheiten (200) genutzt werden, um die Erntemaschine oder die Maschineneinstellungen, bspw. die Gebläsedrehzahl, die Siebweite und Ähnliches, zu steuern oder zu regeln.

## Claims

1. A sensor unit (200) for use in a multiphase flow of air and plant parts of the transport and/or separation air flow of a harvesting machine,
wherein the sensor unit (200):
a) serves as a transmitter and has at least one device for emitting electromagnetic radiation (2002), or
b) serves as a receiver and comprises at least one device for receiving electromagnetic radiation (2002), or
c) serves as a transmitter/receiver and comprises at least one device for emitting (2001) and at least one device for the receiving electromagnetic radiation (2002), or
d) serves as a reflector and has at least one device for reflecting electromagnetic radiation (2002), or
e) serves as a receiver/reflector and comprises at least one device for receiving electromagnetic radiation (2002) and at least one device for reflecting electromagnetic radiation (2002),
wherein the sensor unit (200) comprises at least one device for acquiring flow parameters, and the devices for transmitting and/or receiving and/or reflecting electromagnetic radiation (2001, 2002) for detecting grains as well as the device for acquiring flow parameters are together arranged in a housing and are in this way positionable in the multiphase flow
wherein
the leading edge (201) of the housing is rounded, curvedly runs away from the surface of the fastening plane of the sensor unit (200), and a tripwire or turbulators are arranged at the leading adge.

2. The sensor unit (200) according to claim 1 a) or c), **characterized in that** the device (2001) for transmitting electromagnetic radiation exhibits at least one light-emitting diode or laser diode or at least one gas discharge pipe or at least one halogen lamp.

3. The sensor unit (200) according to claim 1 b), c) or e), **characterized in that** the device for receiving (2001) electromagnetic radiation exhibits at least one photodiode or a phototransistor or a CCD arrangement.

4. The sensor unit (200) according to claim 1 d) or e), **characterized in that** the device for reflecting (2002) electromagnetic radiation exhibits one or more reflecting surfaces.

5. The sensor unit (200) according to claim 1, **characterized in that** the device for acquiring flow parameters exhibits at least one hot film sensor (202) for acquiring the flow rate and/or an absolute pressure sensor.

6. The sensor unit (200) according to one of the preceding claims, **characterized in that** the sensor unit (200) exhibits electronic means for recording, processing and/or transmitting the measured sensor values.

7. The sensor unit (200) according to one of the preceding claims, **characterized in that** the sensor unit (200) is equipped with components for generating electrical power from the oscillatory motion of the sensor unit.

8. The sensor unit (200) according to one of the preceding claims, **characterized in that** the housing is keel-shaped in design.

9. The sensor unit (200) according to claim 8, **characterized in that** the leading edge of the housing exhibits a sensor tip directed against the multiphase flow.

10. The sensor unit (200) according to claim 9, **characterized in that** the one or several sensors, preferably hot film anemometers, are located in or on the surface of the sensor tip or in the front area of the sensor tip.

11. The sensor unit (200) according to one of the preceding claims, **characterized in that** the sensor unit (200) exhibits a console (205), with which it can be detachably secured in a fastening device (207).

12. The sensor unit (200) according to claim 11, **characterized in that** fastening the sensor unit (200) in the fastening unit (207) establishes the energy and data connection wireless or by connector.

13. The sensor unit (200) according to claim 11 or 12, **characterized in that** the fastening device (207) exhibits two or several recesses for accommodating sensor units (200), wherein the parts of the fastening device which accommodate the sensor units can be displaced relative to one another in such a way that the distance of the sensor units (200) from one another can be adjusted.

14. The sensor unit (200) according to one of the preceding claims, **characterized in that** a sensor unit (200) comprising a transmitter with a device (2001) for receiving electromagnetic radiation or that a sensor unit with a receiver with a device for emitting electromagnetic radiation in a wall of the channel in which the multiphase flow passes, exchanges electromagnetic radiation for the detection of grains.

15. Use of sensor units (200) according to one of the preceding claims, **characterized in that** the sensor units (200) are located underneath the rotor (304), the straw walker (305), the upper sieve (301) and/or the lower sieve (302) of the harvesting machine.

16. The use of sensor units (200) according to claim 15, **characterized in that** at least two sensor units (200) are located underneath the straw walker (305) and/or the rotor (304) of the harvesting machine.

17. The use of sensor units (200) according to one of claims 15 or 16, **characterized in that** the upper sieve (301) and/or lower sieve (302) of the harvesting machine are divided into segments, wherein opposing sensor units (200) monitor one segment and/or several segments.

18. The use of sensor units (200) according to one of claims 15 to 17, **characterized in that** at least two opposing sensor unit pairs (200) are located one after the other under the upper sieve (301) and/or lower sieve (302) of the harvesting machine, making them suitable for acquiring the change in grain separation in relation to the longitudinal direction of the sieves.

19. The use of sensor units (200) according to one of claims 15 to 18, **characterized in that** the signals of the sensor units (200) are used to control or regulate the harvesting machine or machine settings, for example the blower speed, the sieve width and the like.

## Revendications

1. Unité de capteur (200) destinée à être utilisée dans un écoulement polyphasique d'air et de parties de plantes du flux d'air de transport et/ou de séparation d'une machine de récolte, l'unité de capteur (200)
a) servant d'émetteur et présentant au moins un dispositif permettant l'émission de rayonnement électromagnétique (2002), ou
b) servant de récepteur et présentant au moins un dispositif permettant la réception de rayonnement électromagnétique (2002), ou
c) servant d'émetteur/récepteur et présentant au moins un dispositif permettant l'émission (2001) et au moins un dispositif permettant la réception de rayonnement électromagnétique (2002), ou
d) servant de réflecteur et présentant au moins un dispositif permettant la réflexion de rayonnement électromagnétique (2002), ou
e) servant de récepteur/réflecteur et présentant au moins un dispositif permettant la réception de rayonnement électromagnétique (2002) et au moins un dispositif permettant la réflexion de rayonnement électromagnétique (2002),
l'unité de capteur (200) présentant au moins un dispositif permettant la détection de grandeurs caractéristiques suivant la mécanique de l'écoulement et les dispositifs permettant l'émission et/ou la réception et/ou la réflexion de rayonnement électromagnétique (2001, 2002) destiné à la détection de grains ainsi que le dispositif permettant la détection de grandeurs caractéristiques suivant la mécanique de l'écoulement étant disposés ensemble dans un boîtier et pouvant ainsi être introduits dans l'écoulement polyphasique, le bord d'attaque (201) du boîtier s'étendant de manière arrondie en s'éloignant de la surface du plan de fixation de l'unité de capteur (200), et un fil de détente ou des turbulateurs étant disposés au niveau du bord d'attaque.

2. Unité de capteur (200) selon la revendication 1 a) ou c), **caractérisée en ce que** le dispositif (2001) permettant l'émission de rayonnement électromagnétique présente au moins une diode électroluminescente ou une diode laser ou au moins un tube à décharge gazeuse ou au moins une lampe halogène.

3. Unité de capteur selon la revendication 1 b), c) ou e), **caractérisée en ce que** le dispositif permettant la réception (2001) de rayonnement électromagnétique présente au moins une photodiode ou un phototransistor ou un agencement CCD.

4. Unité de capteur (200) selon la revendication 1 d) ou e), **caractérisée en ce que** le dispositif permettant la réflexion de rayonnement électromagnétique (2002) présente une ou plusieurs surfaces spéculaires.

5. Unité de capteur (200) selon la revendication 1, **caractérisée en ce que** le dispositif permettant la détection de grandeurs caractéristiques suivant la mécanique de l'écoulement présente au moins un capteur à film chaud (202) permettant la détection de la vitesse d'écoulement et/ou un capteur de pression absolue.

6. Unité de capteur (200) selon l'une des revendications précédentes, **caractérisée en ce que** l'unité de capteur (200) présente des moyens électroniques permettant d'enregistrer, de traiter et/ou de transmettre les valeurs de mesure de capteur.

7. Unité de capteur (200) selon l'une des revendications précédentes, **caractérisée en ce que** l'unité de capteur (200) est équipée de composants permettant de générer de la puissance électrique à partir du mouvement oscillatoire de l'unité de capteur.

8. Unité de capteur (200) selon l'une des revendications précédentes, **caractérisée en ce que** le boîtier est en forme de quille.

9. Unité de capteur (200) selon la revendication 8, **caractérisée en ce que** le boîtier présente une pointe de capteur au niveau du bord d'attaque.

10. Unité de capteur (200) selon la revendication 9, **caractérisée en ce qu'un** ou plusieurs capteurs, de préférence des anémomètres à film chaud, sont disposés dans ou sur la surface de la pointe de capteur ou dans la zone avant de la pointe de capteur.

11. Unité de capteur (200) selon l'une des revendications précédentes, **caractérisée en ce que** l'unité de capteur (200) présente une console (205) au moyen de laquelle elle peut être fixée de manière amovible dans un dispositif de fixation (207).

12. Unité de capteur (200) selon la revendication 11, **caractérisée en ce que** la liaison d'énergie et de données est établie sans fil ou au moyen d'un connecteur au moyen de la fixation de l'unité de capteur (200) dans le dispositif de fixation (207).

13. Unité de capteur (200) selon la revendication 11 ou 12, **caractérisée en ce que** le dispositif de fixation (207) présente deux évidements ou plus pour la réception d'unités de capteur (200), les parties du dispositif de fixation recevant les unités de capteur pouvant être déplacées les unes par rapport aux autres de telle sorte que la distance entre les unités de capteur (200) peut être réglée.

14. Unité de capteur (200) selon l'une des revendications précédentes, **caractérisée en ce qu'une** unité de capteur (200) comportant un émetteur échange un rayonnement électromagnétique destiné à la détection de grains avec un dispositif (2001) permettant la réception de rayonnement électromagnétique **ou en ce qu'**une unité de capteur comportant un récepteur échange un rayonnement électromagnétique destiné à la détection de grains avec un dispositif permettant l'émission de rayonnement électromagnétique, dans une paroi du canal dans lequel passe l'écoulement polyphasique.

15. Utilisation d'unités de capteur (200) selon l'une des revendications précédentes, **caractérisée en ce que** les unités de capteur (200) sont disposées en dessous du rotor (304), du secoueur à claies (305), du crible supérieur (301) et/ou du crible inférieur (302) de la machine de récolte.

16. Utilisation d'unités de capteur (200) selon la revendication 15, **caractérisée en ce qu'**au moins deux unités de capteur (200) sont disposées sous le secoueur à claies (305) de la machine de récolte et/ou le rotor (304) de la machine de récolte.

17. Utilisation d'unités de capteur (200) selon l'une des revendications 15 ou 16, **caractérisée en ce que** le crible supérieur (301) de la machine de récolte et/ou le crible inférieur (302) de la machine de récolte sont divisés en segments, des unités de capteur (200) opposées les unes aux autres surveillant un segment et/ou plusieurs segments.

18. Utilisation d'unités de capteur (200) selon l'une des revendications 15 à 17, **caractérisée en ce qu'au** moins deux paires d'unités de capteur (200) opposées l'une à l'autre sont disposées l'une derrière l'autre sous le crible supérieur (301) de la machine de récolte et/ou le crible inférieur (302) de la machine de récolte, lesquelles paires sont aptes à détecter la variation de la séparation de grains par rapport à la direction longitudinale des cribles.

19. Utilisation d'unités de capteur (200) selon l'une des revendications 15 à 18, **caractérisée en ce que** les signaux des unités de capteur (200) sont utilisés pour commander ou pour régler la machine de récolte ou les réglages de machine, par exemple la vitesse de rotation de ventilateur, la largeur de crible et autres.
